# EUROPEAN PATENT APPLICATION

(11) **EP 0 942 569 A2**
(43) Date of publication of application: **15.09.1999**
(21) Application number: 99301555.1
(22) Date of filing: 02.03.1999
(51) Int. Cl.: H04L 29/06

(54) **Simple data link (SDL) protocol**

(30) Priority: 13.03.1998 US 39112
(71) Applicant: LUCENT TECHNOLOGIES INC., Murray Hill, New Jersey 07974-0636 (US)
(72) Inventor: Doshi, Bharat Tarachand, Holmdel, New Jersey 07733 (US); Dravida, Subrahmanyam, Freehold, New Jersey 07728 (US); Hernandez-Valencia, Enrique, Highlands, New Jersey 07732 (US); Matragi, Wassim A., Brooklyn, New York 11209 (US); Qureshi, Muhammed Akber, Metuchen, New Jersey 08840 (US)
(74) Representative: Watts, Christopher Malcolm Kelway, Dr.

(57) **Abstract**

A simple point-to-point data link protocol (SDL) is defined which is based on the use of a length indicator field and an error check field, rather than a flag, for performing packet boundary recovery in a receiver. In an embodiment of the invention, an SDL transmitter transmits SDL packets comprising a header and a variable length payload. The SDL header comprises a length indicator (LI) field, a type field and a cyclic redundancy check (CRC) field. For receiving these transmitted SDL packets, SDL supports the use of a self-synchronization/self-delineation technique in the receiver. The receiver performs self-delineation as a function of the LI field, and performs self-synchronization, or packet recovery, as a function of both the LI field and the header CRC field. In particular, in performing packet recovery, the receiver performs a CRC check over each received SDL packet header and synchronization is declared after *N* correct checks, e.g., *N* = *4*. The SDL receiver operates in a hunt mode when performing synchronization, and a normal mode when synchronization has been accomplished.

## Description

### Field of the Invention

This invention relates generally to communications and, more particularly, to packet-based communications systems.

### Background of the Invention

Data link protocols that use HDLC (high-level data link control) framing protocols such as PPP(point-to-point protocol)/HDLC (W. Simpson, *"PPP in HDLC-like Framing,"* RFC 1662, July 1994) and Frame Relay (American National Standard For Telecommunications - Integrated Services Digital Network - Core Aspects of Frame Protocol for Use with Frame Relay Bearer Service, ANSI T1.618-1991, 18 June 1991) both use flag-based delineation of protocol data units (PDUs) in forming packets. While flag-based delineation allows for variable amounts of data in a PDU, this delineation method also uses bit/byte stuffing and removal at the transmitter and receiver, respectively. Such operations require complex byte/bit stream pattern match and processing, which limits the scaleability to higher speeds. Moreover, when the delineation flag pattern appears within the PDU data then stuffing is done to distinguish it from the true delineation flags of the PDU. This stuffing expands the data offered to the data link and creates variable transmission overhead for different PDUs, thus interfering with some QoS (quality of service) management mechanisms. As a result, both of these framing protocols are inadequate for high-speed links, particularly if they are to support moderate to stringent QoS requirements for virtual private network applications, such as committed minimum bandwidth or dedicated virtual pipes. In addition, such flag delineation further allows malicious users to inflate significantly the bandwidth requirement by sending a stream of delineation flag patterns within the PDU.

One alternative to using flag delineation is to use a cyclic redundancy check (CRC) for the purpose of packet delineation. This is illustrated by, e.g., ATM (asynchronous transfer mode), which has fixed size packets.

### Summary of the Invention

Notwithstanding its use in fixed size packets, the ability to extend the use of a CRC for providing frame delineation in variable length packets is known. However, we have realized that although it would seem straightforward to apply the same frame synchronization procedures that apply to fixed length packets to variable length data, that is not the case. We have made the following observations:
a) fixed sized packets simplify hunting procedure for the next packet boundary (next CRC);
b) lack of error correction increases the probability of loosing frame boundaries (link synchronization);
c) small packets are typically used (e.g., 48 bytes in ATM), which greatly reduces the probability of false boundary detection;
d) fixed size packets expose a smaller fraction of the framed payload to be examined by the receiver during the frame re-synchronization procedure, which greatly decreases exposure to malicious user attacks;
e) smaller packets also increase the probability of data interleaving from multiple sources, which also decreases the probability of successful attacks from malicious users; and
f) variable length packets tend to have loose maximum size bounds (up to 64 Kbytes in IP (Internet Protocol)) which increases the exposure of the receiver to malicious attacks during link re-synchronization procedures.

As a result of the above, we have realized that CRC-based packet boundary recovery procedures for fixed sized packets perform poorly when applied to variable length data. Therefore, and in accordance with the invention, we present a simple point-to-point data link protocol (SDL) which is based on the use of a length indicator field and an error check field, rather than a flag, for performing packet boundary recovery in a receiver.

In an embodiment of the invention, an SDL transmitter transmits SDL packets comprising a header and a variable length PDU (also referred to herein as a payload, user data, or datagram). The header comprises a length indicator (LI) field, a type field and a cyclic redundancy check (CRC) field. For receiving these transmitted SDL packets, SDL supports the use of a self-synchronization/self-delineation technique in the receiver. The receiver performs self-delineation as a function of the LI field, and performs self-synchronization, or packet recovery, as a function of both the LI field and the header CRC field. In particular, in performing packet recovery, the receiver performs a CRC check over each received SDL packet header and synchronization is declared after N correct checks, e.g., *N* = *4*. The SDL receiver operates in a hunt mode when performing synchronization, and a normal mode when synchronization has been accomplished.

In another embodiment of the invention, an SDL transmitter transmits the above-described SDL packets such that, at the physical layer, the SDL header is transmitted in an unscrambled form and the SDL PDU is transmitted in a scrambled form. For receiving these transmitted SDL packets, an SDL receiver operates in a hunt mode when performing the above-described synchronization, and a normal mode when synchronization has been accomplished. In the normal mode of operation, the SDL receiver descrambles the SDL PDU, while in the hunt mode of operation the SDL receiver does not unscramble the SDL PDU. This form of hunt mode provides for extra protection against potential malicious users.

### Brief Description of the Drawing

FIG. 1 shows an illustrative SDL frame in accordance with the principles of the invention;
FIG. 2 shows a packet communications system in accordance with the principles of the invention;
FIG. 3 shows an illustrative SDL packet stream;
FIG. 4 shows SDL receiver states in accordance with the principles of the invention;
FIG. 5 shows an illustration of SDL receiver processing in the hunt state;
FIG. 6 shows an illustrative flow chart for recovering packet boundaries in accordance with the principles of the invention; and
FIG. 7 shows another embodiment of the inventive concept.

### Detailed Description

In accordance with the inventive concept, a new point-to-point data link layer protocol, referred to herein as the Simple Data Link (SDL) protocol is described. SDL does not use flags for delineation of protocol data units (PDU) over the data link. Instead, SDL uses a self-synchronization/self-delineation technique where a CRC check is performed over the SDL packet header and synchronization/delineation is declared after few correct checks (described below). It is this avoidance of byte-level processing that makes SDL particularly scaleable to very high link rates. The packet framing and synchronization mechanisms for SDL are described below.

### SDL Framing

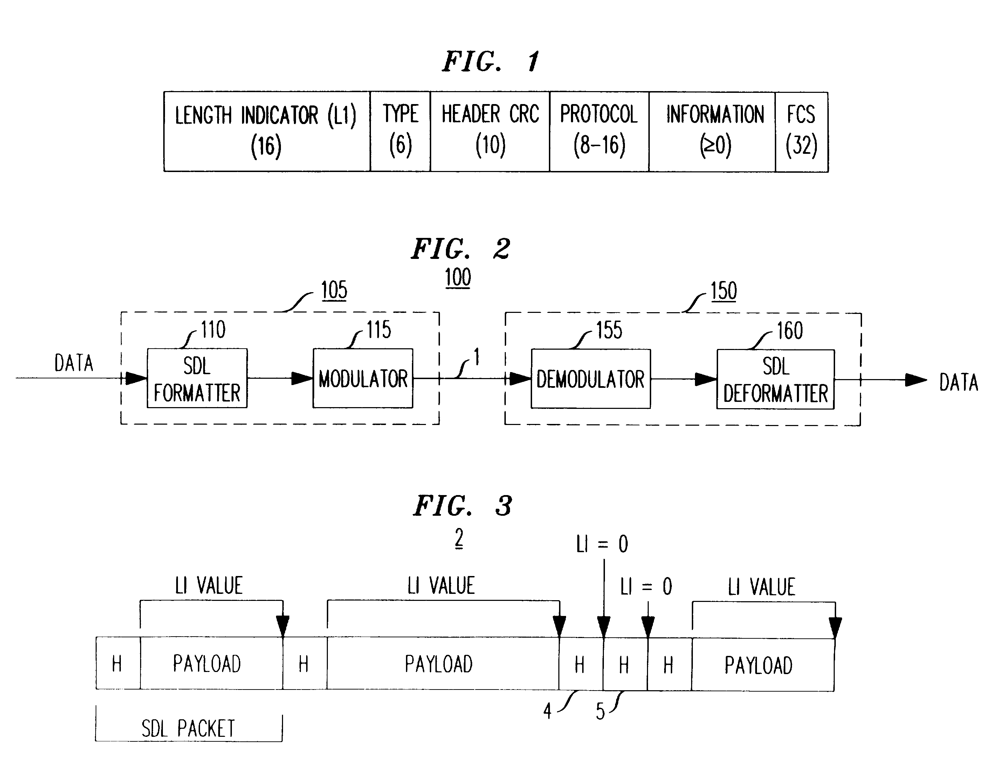

SDL framing is designed to support both the multiplexing of multiprotocol datagrams as well as the multiplexing of a small number of logical virtual links within the data link. A summary of an illustrative SDL frame structure is shown in FIG. 1. (This assumes PPP as the framed PDU). Fields are to be transmitted from left to right. An SDL frame comprises a header and a PDU. The header comprises a length indicator, type, and header CRC fields. The PDU comprises a protocol, information, and frame check sequence (FCS) field.

The length indicator (LI) Field is 2 octets (16 bits) long. Its value indicates the total length of the data link PDU, including headers, information and trailing PDU fields.

The type field is 6 bits long. Initially, the use of the type field is "reserved." However, the value of the type field may be used for a variety of functions. For example, identifying the type of service to be associated with the datagram encapsulated in the information field; providing support for simple control functions; providing an indication that the encapsulated datagram contains link control information; identifying logical channels within a virtual SDL link, or identifying multiple physical SDL links multiplexed into a single virtual SDL link, via logical channel identifiers.

The header CRC field is intended for single bit error correction and multiple bit error detection (described below). The header CRC field is 10 bits long and its value indicates the coefficients of the header integrity check. The header CRC field is calculated over all bits in the length indicator and type fields.

The protocol field is either one or two octets long. Its value identifies the protocol type of the datagram encapsulated in the information field. The structure of this field is the same as described for the Protocol Field for PPP (e.g., see W. Simpson, *"PPP in HDLC-like Framing,"* RFC 1662, July 1994).

The information field is zero or more octets long. It contains the datagram from the protocol field identified in the protocol field. The default maximum value for the information field, also referred to as the Maximum Receive Unit (MRU), is 1500 bytes. The MRU may also be negotiated.

The frame check sequence (FCS) Field is 4 octets long and constitutes the trailer of the SDL frame. Its value indicates the coefficients for the frame integrity check. The FCS field is calculated over all bits in the protocol and information Fields. The FCS field provides payload protection against data link errors. For real time services, error checking of the payload may not be necessary. In that event, there are two options. The real time nature is indicated by a setting of the type field. At the receiver, these packets are handed to the next layer even if the FCS fails, in which case, an indication that the FCS has failed is also passed along. A second option is not to include the FCS field for real time services, which are indicated by a setting of the type field.

In accordance with the inventive concept, SDL supports packet length delineation through the LI field, and packet boundary recovery functions through both the LI field and the header CRC field during link synchronization procedures (described below).

### SDL Link Operation

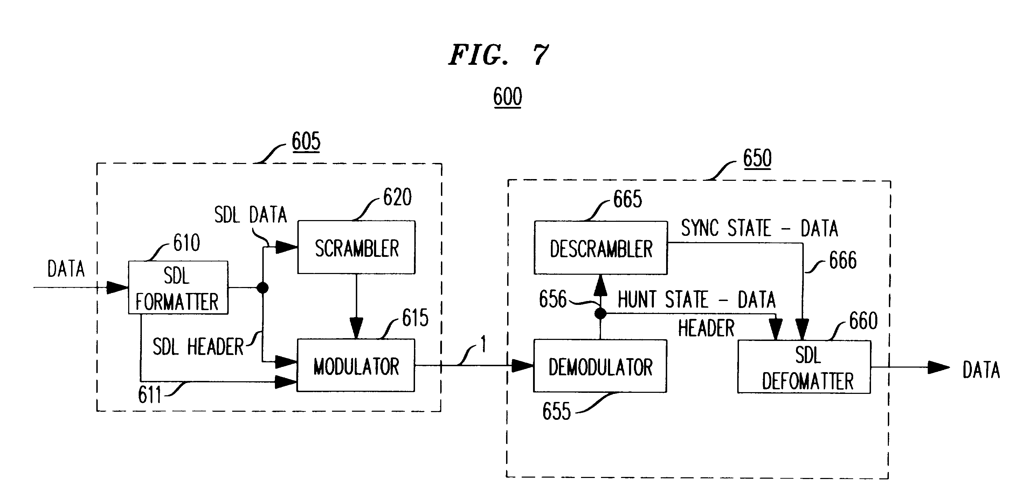

An illustrative packet communications system 100 in accordance with the principles of the invention is shown in FIG. 2. Other than the inventive concept, the elements shown in FIG. 2 are well-known and will not be described in detail. For example, modulator 110 forms a transmission signal at the physical layer for transporting the data as known in the art, e.g., by modulating a carrier using quadrature amplitude modulation (QAM). Also, although the illustrative embodiment is representative of a PPP connection between, e.g., residential customer premises equipment and an Internet Service provider, the inventive concept is applicable to any packet-based network architecture including those with baseband transmission. It should also be noted that for simplicity other processing of the SDL payload is not shown, e.g., further retransmission or encapsulation of the SDL payload across other packet or switched networks (as would be the case when receiver 150 is representative of receiving equipment of an Internet service provider). Finally, the elements shown in the FIGs. 2 or 7 can either be implemented in hardware and/or software.

Packet communications system 100 comprises SDL transmitter 105 and SDL receiver 150. For simplicity, only that portion of SDL transmitter 100 and SDL receiver 150 relevant to the inventive concept is shown. SDL Transmitter 100 comprises SDL formatter 110 and modulator 115. SDL Formatter 110 receives data stream 109 and formats the data stream into SDL packets as shown in FIG. 1 to provide a stream of SDL packets to modulator 115. Although not shown, SDL formatter 110 includes a buffer for buffering data, a counter for forming the value of the LI field, and a CRC generator for forming the value for the CRC field. Modulator 115 forms a signal for transmission to receiver 150 via facility 1, which is illustratively representative of a circuit switched connection.

SDL Receiver 150 comprises demodulator 155 and SDL deformatter 160. Demodulator 155 demodulates the received signal and provides a stream of packetized data to SDL deformatter 160. The latter performs delineation and packet recovery in accordance with the principles of the invention (described below).

SDL allows for high-speed delineation of asynchronous variable length datagrams. In order to achieve this purpose, SDL receiver 150 looks for the length indicator field at the beginning of each SDL packet to extract the underlying datagram, or payload, and determine the starting point to the next SDL packet. FIG. 3 illustrates a stream of packetized data 2, representing a number of SDL packets. SDL deformatter 160 uses the LI values of each received SDL packet for packet delineation. When no datagrams are available for transmission, SDL transmitter 100 transmits SDL packets with LI set equal to a value of zero, a default value for Type and the corresponding CRC, as illustrated by SDL packets 4 and 5, of FIG. 3.

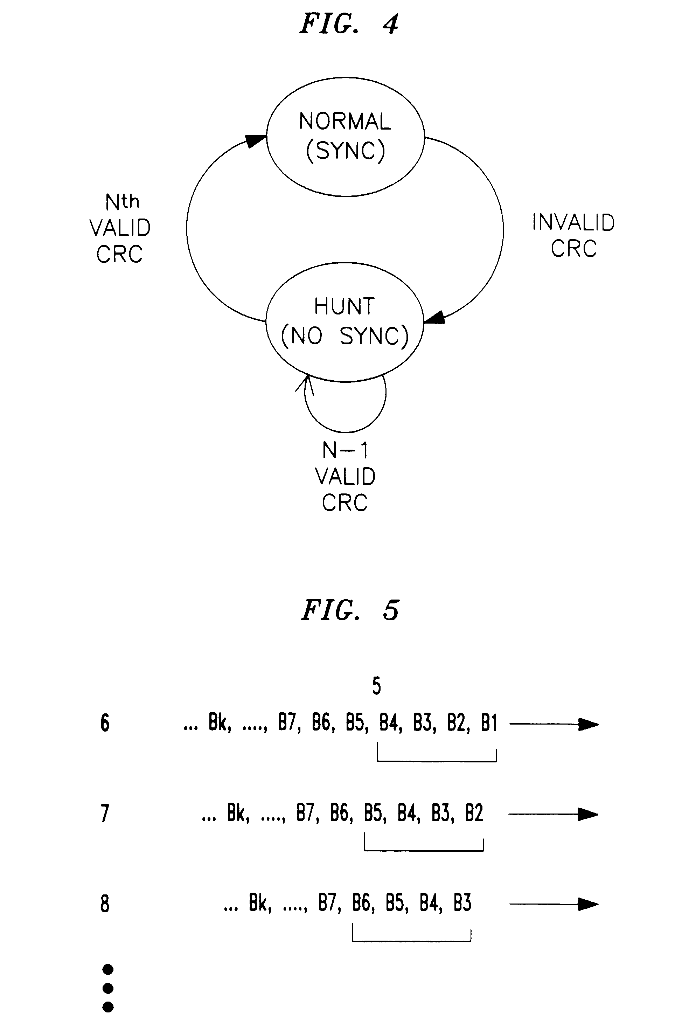

Packet demarcation in SDL is very simple. It is based on the following self-synchronization/self-delineation principles, as illustrated in FIG. 4 SDL receiver 150 operates in two modes of operation: a sync (or normal) state and a hunt state.

In the sync state, SDL receiver 150 uses the LI value from the header of each received SDL packet length to simply extract the payload from each received SDL packet. In this state, SDL deformatter 160 validates the incoming CRC, examines the length field, extracts the payload, and then rolls over to the next SDL header. The CRC field of the SDL header is used to ensure that there are no errors in the SDL header. The CRC should support single bit error correction to minimize the chance of a corrupted SDL header. as single bit errors are the most common bit error event. In this example, the CRC is the ITU (International Telecommunications Union) polynomial, 1 + x + x⁴ + x⁵ + x⁹ + x¹⁰, which has been implemented in ATM Adaptation Layer (AAL) 3/4 in ATM (e.g., see ITU-T Recommendation I.363 (1996), BISDN-ATM Adaptation layer specification). The AAL 3/4 CRC polynomial provides a minimum Hamming distance of 4. It allows for single bit error correction. In order to accommodate the occurrence of burst errors, the SDL receiver operates in correction and detection modes. Even in the correction mode, the CRC can detect all two bit error patterns.

However, when burst errors occur in the SDL header the self-delineating property of SDL framing is compromised and the value of the LI field cannot be used to delineate the SDL packet. As such, when more than one bit errors occur in the header, the SDL receiver 150 enters the hunt state to reacquire the lost packet boundaries. (In comparison, in the case of ATM cells, the cell size is fixed. Therefore in ATM even when there are uncorrectable errors in one particular header, the ATM receiver knows where the next cell header starts and can process the next cell header. However in SDL, the packet sizes are variable in length. Therefore, when there are uncorrectable errors in the SDL header, the SDL receiver has to enter a packet the hunt state to discover the location of the next SDL header. )

As mentioned above, SDL enters the Hunt state when the CRC detects uncorrectable errors in the SDL header. In accordance with the inventive concept, in the hunt state SDL receiver 150 starts looking, or scanning, for the boundary to the next SDL packet (described further below). SDL receiver 150 remains in the hunt mode until *N* correct CRCs have been detected. After *N* valid CRCs have been detected, SDL receiver 150 transitions back to the sync state of operation, described above.

In the hunt state, SDL deformatter 160 begins to look for a valid CRC by sliding by one byte at-a-time in search of a valid CRC. This is illustrated in FIG. 5. A data stream 5 comprises a stream of bytes transmitted from right to left as represented by bytes B1 through Bk, etc. SDL formatter performs a number of similar processing steps (here only represented by steps 6, 7, and 8) on this data stream until *N* correct CRCs have been detected. In each step, SDL deformatter 160 looks at a four byte window and evaluates these four bytes as if they were a valid SDL header. For example, in step 6, SDL deformatter 160 looks for a valid CRC by presuming that bytes B1 through B4 represent a valid header. Similarly, in steps 7 and 8, SDL deformatter 160 looks for a valid CRC by presuming that bytes B2 through B5, and then bytes B3 through B6, each represent a valid header.

Once SDL deformatter 160 finds a valid CRC, the value of the Length Indicator field is examined and based on that value, the next CRC is examined for this potential frame boundary. Yet, the SDL deformatter 160 continues to slide one byte at a time. A separate counter is initialized for each potential frame boundary detected (described further below). The practical number of such counters to be supported is bounded by the maximum frame size.

This frame re-synchronization algorithm requires that enough correct CRCs are detected consecutively, say *N* (*N>1*), to provide a low probability of a false boundary delineation. When the first sequence of such *N* consecutive and valid CRC are encountered then the SDL receiver transitions back to the sync state (as shown in FIG. 4). If any of the header CRC checks fails during this state the SDL receiver adjusts the counters used in the hunting procedure according to the last valid CRC match (described further below).

With the proposed re-synchronization algorithm, 4 consecutive matches of SDL header CRCs (where the second, third and fourth SDL header locations are derived from the length indicators of previous headers) should suffice to guarantee a low frame re-synchronization failure for most practical scenarios of interest. Storing the length indicators in counters while continuing to performing the CRC computation by sliding one byte at a time has the advantage of resolving the true SDL header location versus an accidental match of the CRC in the shortest possible time. With 4 consecutive matches, a reliability of 2⁽⁻⁴⁰⁾ or 10⁽⁻¹²⁾ can be provided. The proposed frame re-synchronization procedure guarantees that packet boundary re-synchronization is achieved in exactly 4 packet intervals.

If the reliability needed is 10⁽⁻⁹⁾ then 3 consecutive passes of the CRC could be used to declare packet boundary acquisition. When there are random errors, the header CRC corrects single bit errors in the SDL header. As noted, the SDL receiver enters the hunt state in presence of burst errors. Generally burst errors in fiber systems appear to last between 20 to 40 ms. An additional re-synchronization time of 4 packet intervals is insignificant at these transmission speeds. Another option is to pass up to the higher layer (not shown) packets that pass two consecutive CRC checks. If, in fact these packets are erroneous then the 32 bit FCS on the payload of the packet will detect and discard the packets.

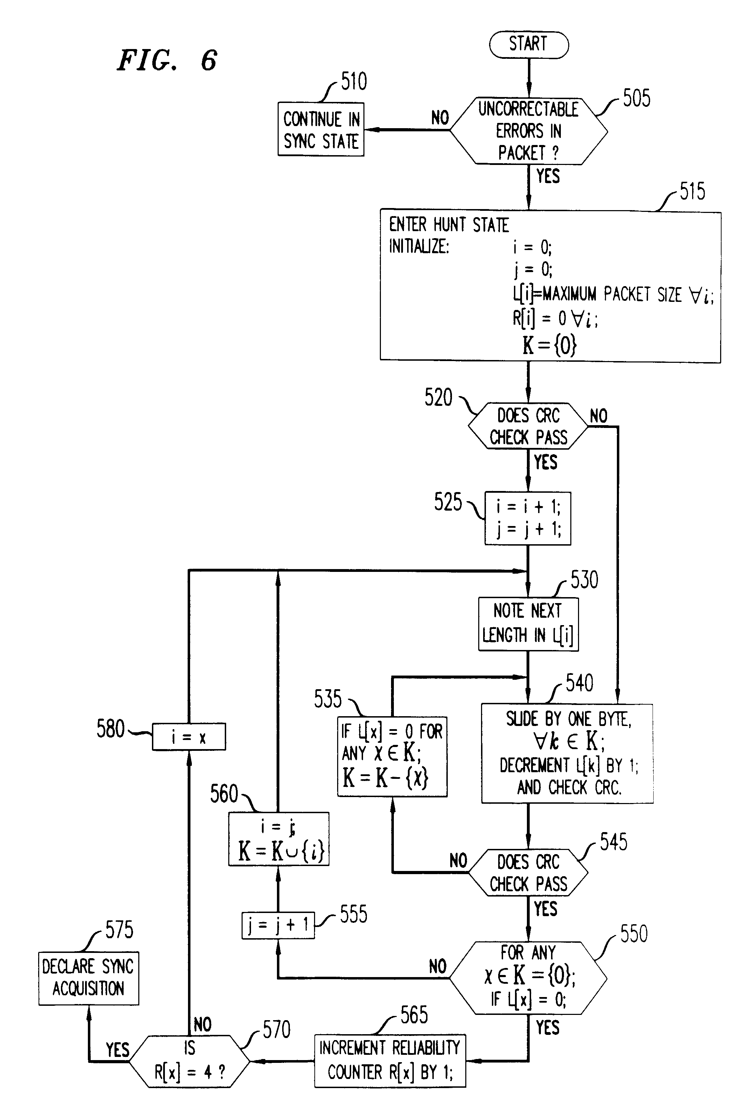

An illustrative flow chart for reacquiring packet boundaries in accordance with the principles of the invention is shown in FIG. 6. For the purposes of this description it is presumed that SDL deformatter 160 comprises a stored-program-controlled processor and is suitably programmed to carry out the below-described method using conventional programming techniques, which, as such, will not be described herein. The process starts in step 505. If SDL deformatter 160 does not detect an uncorrectable error in the current received SDL packet, SDL deformatter remains in the sync state in step 510 and continues to recover payloads from received SDL packets using the respective values of the LI field.

However, if SDL deformatter 160 detects an undetectable error, SDL deformatter 160 enters the hunt state in step 515 and initializes a set of variables:
*i* = 0; a counter; and
*j* = 0; a counter.

- *L*: is an array of counters that is initialized with the length indicator of valid CRCs. The size of the array is determined by the number of "sequences" of valid headers which has a theoretical upper bound of the maximum packet size allowed (e.g., 5000 bytes). However, with a high degree of confidence(7 x 10⁻²⁴), only 24 sequences need to be pursued.
- *K*: is a set of indices of array *L* which contains the sequences of valid headers (it is recommended that the maximum number of elements be 24 for the reasons explained above).
- *L[k]*: is a counter indicating the remaining number of bytes to the next "expected header" of sequence *k.*
- *x*: is an element of the set *K* (a sequence element);
- *R*: is an array of counters keeping track of the number of valid headers in a sequence;
- *R[x]*: is a counter indicating the number of valid headers in the sequence x, *0 ≤R[x] ≤4*.

A valid sequence means a sequence of headers where the length indicator of the *i*^{*th*} header points to the starting location of the (*i* + *1*)^{th} header.

In step 520, SDL deformatter 160 evaluates the CRC. If the CRC does not check, then SDL deformatter 160 goes to step 540, described below. If the CRC does check, SDL deformatter 160 increments the values of *i* and *j* in step 525. In step 530, SDL deformatter 160 determines the next length in *L[i].* In step 540, SDL deformatter 160 slides by one byte, and for all *k ∈* K decrements *L[k]* by one and checks the respective possible CRC field values. In step 545, SDL deformatter 160 checks the CRC for passing. If this CRC check does not pass, SDL deformatter 160 returns to step 540 via step 535 and slides an additional byte. (In step 535, if *L[x]* = *0* for any *x ∈* K, the set K is reduced by {x}.) If the CRC does check, SDL deformatter 160 checks for any *x* ∈ K - {0} if *L[x]* = *0* in step 550. If no, SDL deformatter 160 increments the value of j and updates the value of *i* in steps 555 and 560, respectively. Additionally SDL deformatter 160 changes the set *K* to be equal to *K ∪ {i}* in step 560. SDL deformatter 160 then returns to step 530. However, if in step 550 the result is yes, SDL deformatter 160 increments the value of the reliability counter, *R[x]* in step 565. In step 570, SDL deformatter 160 checks if the value of the reliability count is equal to four. If yes, synchronization is declared in step 575 and SDL deformatter 160 returns to the sync state. If no, SDL deformatter 160 sets the value of *i* equal to *x* in step 580 and returns to step 530.

With respect to the above-described hunt mode of operation, other variations are possible. For example, when the CRC is respected, SDL deformatter 160 reads the length value from the LI field and skips to the next possible SDL header to check if this possible SDL header has a valid CRC. Since the header CRC is 10 bits long the chance of accidentally passing the CRC check is quite low, e.g., on the order of 2⁻¹⁰≅ 10⁻³.

### Performance Considerations

The SDL header field is 4 bytes long. The probability of an invalid header is 32*p* where *p* is the Bit Error Rate (BER) and therefore the loss of packet synchronization is an order *p* event. It is therefore important to provide single bit error correction in the header field. Table One, below, shows the probability of entering the hunt state as a function of bit error rate (BER).

**Table One**

| *BER* | *Probability of entering the Hunt State* |
|---|---|
| 10⁻⁸ | 5 x 10⁻¹⁴ |
| 10⁻⁹ | 5 x 10⁻¹⁶ |
| 10⁻¹⁰ | 5 x 10⁻¹⁸ |

A few remarks are worth mentioning with respect to the above table. SDL is being designed for implementation in backbone networks where the fiber BER is generally better than 10⁽⁻¹²⁾. Assuming all packets to be of size 64 bytes, even at OC (optical carrier) 768 speeds, SDL will lose packet synchronization because of random errors, on an average of once in 450 days. In fact, the packet re-synchronization events will be dominated by burst errors, which, in fiber transmission systems may occur as often as a few times each day. In the presence of burst errors packet boundary re-synchronization needs to take place irrespective of whether the packet size is fixed or variable. Therefore the overall number of packet re-synchronization events would be the same for ATM and SDL. Another important remark is that in the case of HDLC framing, packet boundary loss occurs much more frequently because a single error in a flag or an error in a data octet causing it to look like a flag will result in packet boundary loss. In the case of HDLC, packet loss occurs as an order *p* event.

As can be observed from above, SDL is intended as a low complexity transport mechanism for PDUs. SDL is particularly suitable to high-speed links such as SONET/SDH point-to-point links, and SONET/SDH paths in general (Bellcore GR-253-CORE, Issue 2, (December 1995)) because SDL avoids the byte-level processing required in the flag-based delineation techniques of the prior art. These high-speed links are able to provide a full-duplex data transmission channel with a low bit error rate, less than 10⁻⁸, and to deliver the incoming data stream in a sequential and orderly fashion, which greatly simplifies data recovery mechanisms at the data link layer. SDL may also support limited virtual link control capabilities via the above-mentioned type field. In addition, SDL provides constant transmission overhead, e.g., there is no need to perform byte stuffing in the transmitter.

Another alternative embodiment is shown in FIG. 7. This embodiment is similar to the above-described embodiment of FIG. 2 except for the addition of scrambling circuitry and control signaling. Referring briefly back to FIG. 2, it is known in the art to use scrambling of a data signal in developing the physical layer transmission signal to provide, e.g., enough signal transitions to ensure clocking. A scrambler was not shown in the embodiment of FIG. 2 since its presence, or lack thereof, was irrelevant to the embodiment illustrated therein. However, and in accordance with a feature of the invention, control of the scrambler provides a more secure method for protecting against malicious users, e.g., users who deliberately try to mimic header information in the payload of the packet. Turning now to FIG. 7, packet communications system 600 comprises SDL transmitter 605 and SDL receiver 650. SDL transmitter 605 comprises SDL formatter 610, scrambler 620 and modulator 615. SDL formatter 610 formats the data stream as described above. In addition, SDL formatter 610 provides control signaling 611 to modulator 615. In response to control signaling 611, modulator 615 either transmits SDL packet header information without using scrambler 620 or transmits SDL packet data after scrambling by scrambler 620. Control signaling 611 synchronizes modulator 615 as to which output signal to use as the source of the data to be modulated. The resulting output signal from modulator 615 represents an SDL header that is not scrambled and scrambled SDL data.

SDL receiver 650 comprises demodulator 655, descrambler 665, and SDL deformatter 660. Demodulator 655 demodulates the received signal and provides a stream of packetized data 656 to descrambler 655. The latter descrambles packetized data signal 656 and provides an unscrambled signal 666. SDL deformatter 660 performs delineation and packet recovery in accordance with the principles of the invention (described above). However, in this embodiment, SDL deformatter 660 evaluates SDL packet headers by looking at signal 656. In the sync state, SDL deformatter 660 delineates packet boundaries using data represented by signal 656 and recovers SDL data using unscrambled signal 666 at the appropriate time (e.g., after successful evaluation of the 32 bit SDL header by evaluating the data represented by signal 656, SDL deformatter 660 switches from using signal 656 to using signal 666 for the remainder of the SDL packet). However, in the above-described hunt state, SDL deformatter 660 only uses signal 656 in performing the above-described packet boundary recovery. (It should be noted that alternative implementations could also be used, e.g., providing one input signal to the modulator and controlling, e.g., a multiplexer which selects either the output signal from formatter 610 or scrambler 620 for application to modulator 615. Similar alternative implementations can be performed in the corresponding receiver.)

The foregoing merely illustrates the principles of the invention and it will thus be appreciated that those skilled in the art will be able to devise numerous alternative arrangements which, although not explicitly described herein, embody the principles of the invention and are within its scope. For example, although the inventive concept was illustrated herein as being implemented with discrete functional building blocks, e.g., an SDL formatter, etc., the functions of any one or more of those building blocks can be carried out using one or more appropriately programmed processors, e.g., a digital signal processor; discrete circuit elements; integrated circuits; etc.

For example, it should be noted that if 4 byte or 8 byte parallel processing is deemed necessary then all of the operations shown in FIG. 6 including CRC computations can be performed in parallel. Also, although not described, Link Configuration Protocol (LCP) procedures may be defined for SDL. Such procedures should be consistent with existing configuration capabilities in the LCP for PPP. SDL specific parameters, such as interpretation of the type field, SDL header compression, protocol field compression, etc. may be configured using such LCP procedures. Most existing NCP (network control protocols) should work over SDL with minimal (if any) modifications.

In addition, the SDL packet delineation mechanism can be used even when the physical layer does not provide byte boundaries. An example is the mapping of IP packets using SDL directly onto optical wavelengths. In this case, during the hunt state the CRC checking needs to be done by sliding one bit at a time.

## Claims

1. A method for use in performing packet boundary recovery, the method comprising the steps of:
receiving a signal representing a stream of packets, each packet comprising a header portion and a payload portion, the header portion further comprising a length indicator field and an error check field; and
responsive to an error indication in the packet header, performing packet boundary recovery as a function of data representative of a length indicator field value and data representative of an error check field value.

2. The method of claim 1 wherein the performing step includes the step of declaring packet synchronization after N correct checks of values of the error check field

3. The method of claim 1 wherein the error check field is a cyclic redundancy check field.

4. The method of claim 1 further comprising the step of detecting the error indication in the packet header.

5. The method of claim 1 wherein the performing step includes the step of disabling a descrambler.

6. Apparatus for use in packet equipment, the apparatus comprising:
a demodulator for receiving a signal representing a stream of packet data, each packet comprising a header portion and a payload portion, the header portion further comprising a length indicator field and an error check field;
a descrambler, responsive to an output signal from the demodulator for descrambling at least the payload portion of each received packet;
a deformatter having a first state of operation and a second state of operation, wherein in the first state the deformatter is responsive to a value of each length indicator field as represented in the output signal of the demodulator for delineating packet boundaries for providing the descrambled payload portion of each packet, and wherein in the second state of operation the deformatter performs packet boundary recovery by scanning the packet data as represented in the output signal of the demodulator for N valid packet headers as represented by associated length indicator and error check field values.

7. The apparatus of claim 6 wherein the error check field is a cyclic redundancy check field.

8. Apparatus for use in a packet system in which a receiver performs packet boundary recovery as a function of a value of a length indicator field and an error check field the apparatus comprising:
a formatter for forming packets, each packet comprising a header portion and a payload portion, the header portion further comprising the length indicator field and the error check field;
a scrambler for scrambling the payload portion of each packet; and
a modulator for modulating (a) the packet headers, which are not scrambled, and (b) the scrambled packet payloads.
